# EUROPÄISCHE PATENTANMELDUNG

(11) **EP 1 069 571 A2**
(43) Veröffentlichungstag der Anmeldung: **17.01.2001**
(21) Anmeldenummer: 00250228.4
(22) Anmeldetag: 11.07.2000
(51) Int. Cl.: G11B 33/00

(54) **Halter für Disketten**

(30) Priorität: 15.07.1999 DE 19934086
(71) Anmelder: Durable Hunke & Jochheim GmbH & Co. KG., 58636 Iserlohn (DE)
(72) Erfinder: Maier-Hunke, Horst-Werner, 58640 Iserlohn (DE)
(74) Vertreter: Böning, Manfred, Prof.Dr.-Ing.

(57) **Zusammenfassung**

Um ein im Bereich seiner Rückwand eine zentrale Öffnung aufweisendes Diskettengehäuse (2) kostengünstig aufbewahren zu können, wurde ein Halter entwickelt, der aus einem Sockel (1) mit einem Joch (3) und senkrecht zu diesem orientierten Schenkeln (4, 5) sowie aus einem Ausleger (13) besteht. Während der Sockel (1) mit von Rippen (7, 8, 9, 10, 11, 12) gebildeten Anschlägen für die Vorderwand des Gehäuses (2) versehen ist, weist der gegen die Rückwand des Gehäuses zur Anlage kommende Ausleger (13) Rastnocken (17) zur Arretierung des Gehäuses im Halter auf.

## Beschreibung

Die Erfindung betrifft einen Halter für Disketten, insbesondere Minidisketten, deren Gehäuse im Bereich seiner Rückwand mit einer zentralen Öffnung versehen ist.

Bekannt sind zur Ablage bzw. Aufbewahrung von Disketten in Kassetten Kästen, Ständern oder Taschen dienende Halter in Form von einseitig offenen flexiblen Hüllen oder formsteifen, meist transparenten Gehäusen, die entweder ebenfalls an einer Seite offen oder aber mit einem Deckel versehen sind (Katalog 980 S. 46-50 der "Durable" Hunke & Jochheim GmbH & Co. KG). Die bekannten Halter verfügen, wenn man von den als flexiblen Hüllen ausgebildeten Ausführungsformen einmal absieht, über einen vergleichsweise komplizierten Aufbau, der mit dem Massenartikelcharakter von Disketten nicht im Einklang steht. Die Verwendung von nach Art einseitig offener Schachteln ausgebildeten formsteifen Gehäusen erweist sich zudem insbesondere dann als unwirtschaftlich, wenn es um die Aufbewahrung von Minidisketten geht, die bekanntlich über ein eigenes festes Gehäuse verfügen.

Der Erfindung liegt die Aufgabe zugrunde, einen Halter für in einem eigenen Gehäuse untergebrachte Disketten zu schaffen, der aufgrund seines einfachen Aufbaus als einstückiges Spritzgußteil herstellbar ist und in dem die Disketten sicher gehalten werden. Diese Aufgabe wird erfindungsgemäß dadurch gelöst, daß der Halter einen Sockel aufweist, der von einem Joch mit mindestens zwei senkrecht zu diesem orientierten Schenkeln gebildet wird, daß der Sockel mit Anschlägen für die Vorderwand des Diskettengehäuses versehen ist und daß sich vom Joch des Sockels in die gleiche Richtung wie die Schenkel mindestens ein federnder Ausleger mit mindestens einem in die Öffnung in der Rückwand des Diskettengehäuses einführbaren Rastnocken erstreckt.

Der erfindungsgemäße Halter ist mit geringem Kostenaufwand in großen Stückzahlen herstellbar. Er läßt sich aufgrund der Elastizität des federnden Auslegers leicht handhaben und bietet die Gewähr für einen sicheren Sitz der jeweiligen Diskette im Halter.

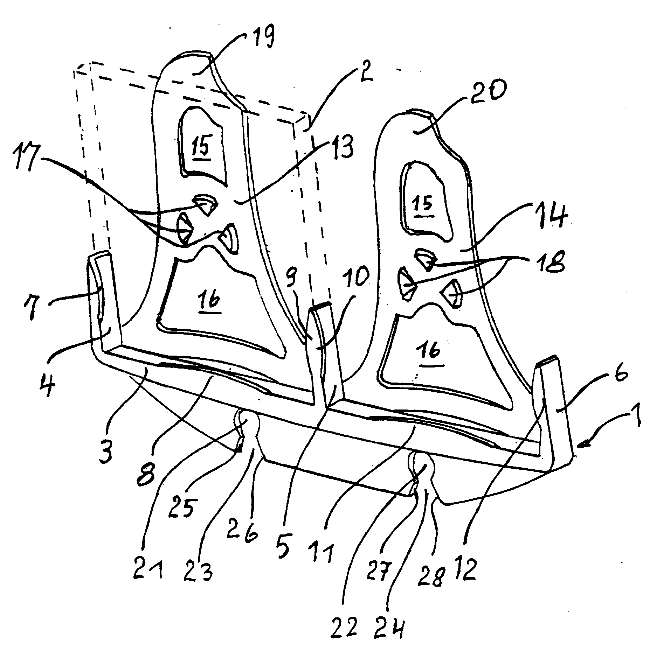

Weitere Merkmale und Einzelheiten der Erfindung ergeben sich aus den Unteransprüchen und der nachfolgenden Beschreibung einer in der beigefügten Zeichnung dargestellten bevorzugten Ausführungsform.

In der Zeichnung ist mit 1 allgemein der Sockel eines Halters bezeichnet, der zwei mit einem eigenen, durch gestrichelte Linien angedeuteten Gehäuse 2 ausgestattete Minidisketten aufnehmen kann. Der Sockel 1 besteht aus einem Joch 3 und drei parallelen Schenkeln 4, 5 und 6, die sich senkrecht nach oben erstrecken und von denen jeweils zwei seitliche Führungsleisten für jeweils ein Gehäuse 2 bilden. Die Schenkel 4, 5 und 6 und das Joch 3 sind mit von Halterippen 7 bis 12 gebildeten Anschlägen für die Vorderwand des von ihnen seitlich partiell übergriffenen Gehäuses 2 versehen. In einem der Dicke des Gehäuses 2 entsprechenden Abstand von den Anschlägen 7 bis 12 erstrecken sich vom Joch 3 zwei federnd ausgebildete Ausleger 13 und 14, die zur Gewichts- und Materialersparnis mit Ausnehmungen 15, 16 versehen sind. An ihrer Vorderseite weisen die Ausleger 13 und 14 jeweils drei Rastnocken 17 bzw. 18 auf, die gewissermaßen Segmente eines kurzen Zapfens bilden, der in eine nicht dargestellte zylindrische Ausnehmung in der Rückwand des Gehäuses 2 einrasten kann und im eingerasteten Zustand jegliche Verlagerung des Gehäuses 2 verhindert. Jeder Ausleger 13, 14 ragt unter Bildung einer Betätigungszunge 19 bzw. 20 über den oberen Rand des von ihm gehaltenen Gehäuses 2 hinweg. Um die jeweilige Diskette vom Halter zu trennen, braucht die ihm zugeordnete Betätigungszunge 19 bzw. 20 lediglich leicht nach hinten gedrückt zu werden.

Um den Halter in einer mit Halteringen versehenen Tasche oder auf einem parallele, zylindrische Tragstangen aufweisenden Ständer lagern zu können, ist sein Joch 3 auf der den Schenkeln 4, 5, 6 gegenüberliegenden Seite mit in einem Steg angeordneten Ablageösen 21, 22 versehen, die Einführschlitze 23 und 24 aufweisen, welche von elastisch verformbaren Flanken 25, 26 bzw. 27, 28 begrenzt werden.

## Patentansprüche

1. Halter für Disketten, insbesondere Minidisketten, deren Gehäuse (2) im Bereich seiner Rückwand mit einer zentralen Öffnung versehen ist, **dadurch gekennzeichnet,** daß er einen Sockel (1) aufweist, der von einem Joch (3) mit mindestens zwei senkrecht zu diesem orientierten Schenkeln (4, 5) gebildet wird, daß der Sockel (1) mit Anschlägen für die Vorderwand des Diskettengehäuses (2) versehen ist und daß sich vom Joch (3) des Sockels (1) in die gleiche Richtung wie die Schenkel (4, 5) mindestens ein federnder Ausleger (13) mit mindestens einem in die Öffnung in der Rückwand des Diskettengehäuses (2) einführbaren Rastnocken (17) erstreckt.

2. Halter nach Anspruch 1, **dadurch gekennzeichnet,** daß die Schenkel (4, 5) und das Joch (3) des Sockels (1) mit jeweils einem Anschlag für die Vorderseite des Diskettengehäuses (2) versehen sind.

3. Halter nach Anspruch 1 oder 2, **dadurch gekennzeichnet,** daß die Anschläge an den Schenkeln (4, 5) und am Joch (3) des Sockels (1) von Halterippen (7, 8, 9) gebildet werden.

4. Halter nach einem der Ansprüche 1 bis 3, **dadurch gekennzeichnet,** daß der Sockel (1) mit zwei Auslegern (13, 14) und drei senkrecht zu seinem Joch (3) orientierten Schenkeln (4, 5, 6) versehen ist.

5. Halter nach einem der Ansprüche 1 bis 4, **dadurch gekennzeichnet,** daß jeder Ausleger (13, 14) eine über den Rand des Diskettengehäuses (2) vorstehende Betätigungszunge (19, 20) aufweist.

6. Halter nach einem der Ansprüche 1 bis 5, **dadurch gekennzeichnet,** daß das Joch (3) an seiner den Schenkeln (4, 5, 6) gegenüberliegenden Seite mit einem mindestens zwei Ablageösen (21, 22) aufweisen Steg versehen ist.

7. Halter nach Anspruch 6, **dadurch gekennzeichnet,** daß die Ablageösen (21, 22) Einführschlitze (23, 24) mit elastisch verformbaren Flanken (25, 26; 27, 28) aufweisen.
